# EUROPEAN PATENT APPLICATION

(11) **EP 4 403 481 A1**
(43) Date of publication of application: **24.07.2024**
(21) Application number: 24152213.5
(22) Date of filing: 16.01.2024
(51) Int. Cl.: B65D 1/02, B01L 3/00, B65D 23/00

(54) **BOTTLE WITH PUNT AND RELATED TRANSPORT AND ANALYSIS SYSTEMS**

(30) Priority: 17.01.2023 IT 202300000528
(71) Applicant: Covim S.r.l., 37057 San Giovanni Lupatoto (VR) (IT)
(72) Inventor: Poli, Elisa, 45020 Giacciano con Baruchella (RO) (IT)
(74) Representative: Münchow, Vera Ute Barbara

(57) **Abstract**

The invention concerns a glass bottle (10, 110; 10A, 110A; 10B, 110B) for containing and pouring a liquid, preferably a beverage, vinegar or a perfume, the bottom (20, 120; 20A, 120A; 20B, 120B) of which is made with a punt. A portion of the central bottom extends as a protrusion (22, 122; 22A, 122A; 22B, 122B) downwards into the recess of the punt. A bottle transport system and a bottle content analysis system are also described.

## Description

### TECHNICAL FIELD

The invention concerns a glass bottle for containing liquids, in particular beverages, vinegars or perfumes, the bottom of which is made with a punt, i.e. with a recess in the bottom of the bottle. The invention also concerns a particular transport or handling system and an analysis system for this bottle. Specifically, the bottle comprises:
(a) a hollow main containment body acting as a container for the liquid during use, preferably having a volume of at least 250 ml, even more preferably a volume of at least 500 ml;
(b) a neck with an opening in the upper part of the bottle;
(c) a bottom made with a punt, i.e. with a recess towards the hollow main containment body of the bottle;
wherein the bottom and the neck enclose between them the hollow main containment body. An alternative term for a punt bottom is a push-up bottom. In French the term used is *piqûre* and the Italian term is *picura.*

### BACKGROUND OF THE INVENTION

Nowadays there are many types of glass bottles that are used to contain the most diverse liquids, such as beverages (wines, spirits, water, juices,...), vinegars, perfumes, medicines, inks, etc.

The modelling of the base with a rather concave shape (punt, i.e. with a recess), a characteristic not present in all types of bottles, though, is probably due to historical production reasons. In the past, when the bottles were handcrafted by blowing glass, the base took on a rounded shape. It was therefore necessary to guarantee the stability of the bottle and precisely for this reason, after processing, the bottom was pushed towards the inside of the bottle, when the glass was still workable. Nowadays, with the precision of machinery, it is possible to create a wide variety of different bottoms, even flat bottoms, and the classic punt shape is maintained, for example, only for aesthetic reasons or to be able to stack the bottles.

Flat or simple punt bottoms of the bottles do not always allow to keep them steady in a certain position when stored or transported, as even supports inserted in the bottom still allow a rotation of the bottles. In addition, traditional punts are suitable for collecting any sediments or foreign bodies that are dropped between the outer wall of the bottom and the inner wall of the bottom, that is, inside a tubular wall bottom, a consequence of the recess of the punt, but they are not ideal spaces to check for the presence of particles, the colour of the liquid or to carry out analyses of the content through the glass.

Simple punt bottoms, that is, bottles with a base or a bottom in the shape of a tubular wall that extends beyond the actual bottom of the bottle or its containment body can optically raise the content of the bottle and allow the visibility of the liquid also inside the tubular wall to visualize and analyse the liquid and any sediments, but they are at the expense of the aesthetics of the bottle, the latter resembling from the outside to a "normal" bottle.

### DISCLOSURE OF THE INVENTION

The object of the invention is to propose a glass bottle that allows the body to be raised with respect to the supporting plane, to have a punt that allows the bottle to be held steady even against slipping and overturning on a complementary support during transport or during any analyses of the content and that at the same time creates a play of reflections in such a way as not to resemble to a bottle that from the outside looks like a uniform body, including the punt bottom. A further object of the invention is to make available a bottle that can be held in place during various process steps, such as production, cleaning, bottling, any transport or handling (for example on conveyor belts with shaped plates for centring), during labelling etc.

A further object of the invention is the creation of a glass bottle which allows a visual or instrumental analysis of the content of the bottle through the glass in the bottom area of the bottle.

The object of the invention is achieved by means of a bottle of the kind initially defined which is characterized in that a portion of the central bottom extends as a protrusion downwards into the recess of the punt.

In the bottle according to the invention, being a punt bottle, the bottom wall is extended perimetrically from a tubular wall that internally defines a cavity or recess raising the bottom of the main containment body acting as a container, thus forming a punt bottom. The bottom of the containment space of the bottle is thus located between the walls of the main containment body and the tubular wall base. The cavity of the punt opens downwards. The punt bottom thus raises the main containment body and any liquid contained in it from the supporting plane when the bottle is in an upright position.

At the same time, the punt with protrusion increases the positional stability of the bottle. In addition, it allows the insertion of a complementary support element to be able to hold the bottle in place during its storage or transport, and all this giving the bottle a particular aesthetic appearance:
The light passes in the bottom through the tubular wall of the base, the protrusion in the cavity of the punt and through the liquid if the protrusion is hollow, elements among which the entering light can be reflected creating a particular play of light, thanks to the different refraction coefficients of the various elements combined.

In the case of the hollow protrusion, the liquid is held on two different levels: above the actual bottom in the main containment body and in the cavity of the protrusion. The content of the bottle is highlighted thanks to its raised position and to the presence of the liquid in the cavity of the protrusion.

As already illustrated with reference to the technical field, a punt creates a tubular wall of the bottom. Preferably, this tubular wall is massive. Since the tubular wall is not hollow and there is at most a small portion of liquid in the cavity of the protrusion, surrounded and then protected by the tubular wall that surrounds it, it allows a high thermal insulation compared to a simple punt with hollow tubular wall, exposing a smaller surface of the liquid contained in the bottle to heat exchange with the outside and in any case providing, like the classic punt, an area in which the thickness of the liquid present in the bottle is less than the main container, with the advantages described below.

The different passages of light and different light diffraction capabilities in a bottle according to the invention also create the impression of different colours. A hollow protrusion allows at the same time the reduction of the amount of glass compared to a massive bottom. Thicknesses and therefore weights necessary for the stability of the bottle can be reduced thanks to the protrusion, which affects the centre of gravity of the bottle, and also create a precious and elegant effect of the bottle. The dimensional ratios chosen and described below ensure good visibility of the liquid.

In a preferred variant of the invention, the protrusion has the geometry of a solid body whose cross-section has a rotational symmetry. Advantageously, the protrusion has the geometry of a symmetrical polyhedron, thus it has a regular polygonal section at any point of its height. These geometries allow, in particular in the case of the polyhedron, not only to be able to rest the bottom of the bottle on respective support elements, but also to limit the rotation of the bottle, for example during the analysis of the content of the hollow protrusion, and all this while maintaining a particular aspect of the bottle.

Shapes that resemble a brilliant or a diamond with the most varied cuts known for these precious stones, which shapes increase the play of light, are also conceivable as geometries. But they do not jeopardise the usefulness of the particular bottom for storage, handling and analysis applications, as will be illustrated later.

In a further advantageous embodiment of the invention, the protrusion has an irregular geometry, such as for example a solid body with an irregular polygon section, or a geometry with a single plane of symmetry (i.e. in section a single axis of symmetry), such as for example a drop-shaped protrusion, which allows not only to block the bottle on a complementary support against its rotation, but which defines a single specific position of the bottle with respect to one or more reference points. Advantageously, the protrusion has a geometry suitable for defining on a respective complementary support element a single position with respect to a reference point. Such reference points may, for example, be the lines along the bottle which are formed during its production in the thin slit present between the two halves of a bottle mould. The bottle label should preferably be positioned between these lines. A protrusion with an irregular geometry allows a precise positioning of the bottle in the labelling machine so that the label is correctly positioned between the two lines.

A drop-shaped protrusion, for example, also helps to give an indication or definition of the position of the bottle with respect to various stages of its rotation during a fermentation process of its content (production of wines, sparkling wines,...).

In summary, the tip-shaped part of the drop or an equivalent geometry can be used to orient the bottle (for example to centre the label or the stopper with respect to the mould joints on the sides of the bottle or to monitor/adjust the rotation of the bottles as is done for some wines in the *"remuage"* phase).

In a preferred variant of the invention, the maximum height of the punt or of its recess with respect to the lowest point of the bottle or with respect to a supporting plane of the bottle is at least twice the thickness of the tubular walls of the bottom at half their height. This ratio helps to have thin walls in the perimeter area of the bottom or foot of the bottle through which the geometry of the punt and the content of any cavity of the protrusion can be seen.

In an alternative embodiment of the invention, the ratio between the maximum height of the punt or of its recess with respect to the lowest point of the bottle or with respect to a supporting plane of the bottle and the thickness of the tubular walls of the bottom at half their height is in a range of 1,2 to 1,7, preferably in a range from 1,4 to 1,5.

In a further preferred variant of the invention, the ratio between the maximum height of the punt or of its recess with respect to the lowest point of the bottle or with respect to a supporting plane of the bottle and the minimum height of the punt or the distance between the lowest point of the protrusion and the lowest point of the bottle or a supporting plane of the bottle is between 2 and 10, preferably between 4 and 10. A preferred ratio is between 7 and 8, for example 7.7. Advantageously, the minimum height of the punt or the distance between the lowest point of the protrusion and the lowest point of the bottle or a supporting plane of the bottle is less than 5 mm, preferably less than 3 mm. The distance preferably approaches zero.

The closer the minimum height of the punt is to zero and the greater the difference between the maximum height and the minimum height of the punt, the more pronounced/noticeable the aesthetic effect, while maintaining the other advantages mentioned above.

In another preferred variant of the invention, the angle between the inclination formed by the inner wall of the tubular base of the bottom with respect to the outer wall (preferably perpendicular to the supporting plane of the bottle) of the tubular base is less than 45°, preferably less than 40°. Even more preferably less than 36°. Particularly preferred are angles with values smaller than 26°. The smaller the angle, the more visible and accentuated the protrusion in the punt.

All these parameters help to increase the visibility of the punt and of the protrusion, but do not jeopardise the other advantages of the bottom according to the invention. The object of obtaining an aesthetically particular bottle is clearly achieved, which in any case allows the body to be raised with respect to the supporting plane, to have a punt that allows the bottle to be held steady even against slipping and overturning on a complementary support during transport or during any analysis of the content and that allows the analysis of the liquid.

A glass bottle with the above indicated bottom parameters (angles; ratio between the maximum height of the punt or of its recess with respect to the lowest point of the bottle or with respect to a supporting plane of the bottle and the minimum height of the punt or the distance between the lowest point of the protrusion and the lowest point of the bottle or a supporting plane of the bottle; ratio between the maximum height of the punt or of its recess with respect to the lowest point of the bottle or with respect to a supporting plane of the bottle and the thickness of the tubular walls of the bottom at half their height), in particular in case of the most preferred ranges or values, creates particular light and colour effects. Specifically, in the case of a massive conical protrusion under a certain inclination of the bottle and with a coloured liquid contained in the bottle, the observer can note a thin ring in the colour of the liquid surrounding the circle formed around the basis of the cone; and also, the tip of the cone seems to be coloured. Changing the inclination of the bottle, the zone of the punt together with the protrusion appears coloured with the colour of the liquid.

The invention provides for two variants of the protrusion, regardless of its outer geometric shape. In a first variant, the protrusion is hollow with a respective cavity forming a single volume with the interior of the hollow main containment body. A liquid contained in this cavity has a reduced thickness with respect to the same liquid contained in the main container of the bottle, allowing, even in the case of dark liquids, to identify the colour of the liquid, to see any foreign bodies in the bottle (which by gravity fall into the cavity of the protrusion) and to analyse the liquid visually or with special analytical instruments in a qualitative and/or quantitative way, for example by UV/VIS analysis.

In the second variant of the protrusion, the protrusion is massive providing greater stability to the bottle.

The bottles according to the invention lend themselves to particular uses, for example in their storage or transport on relative support elements. In this regard, a further aspect of the invention concerns a bottle transport system comprising:
(i) at least one support element comprising a body complementary to said recess with said protrusion suitable to accommodate the bottom of said bottle according to the invention; and
(ii) at least one of said bottles according to the invention.

Advantageously, said transport system comprises a handling element on which said support element is arranged in which the bottle according to the invention is inserted/insertable on the support element.

Inserting the bottle on the support element, which can also be found on shelves, for example, allows to fix the bottle in place and avoid slipping and overturning. The conveyor system may be a belt conveyor, for example.

A combination between a support element and the bottle on a bottle display cabinet, for example a shelf or other display unit, may also be used to maximise the display effect if the support element contains a light source, suitable to specifically illuminate the punt or the protrusion. By stopping the bottle with a support element internal to the bottom, the entire bottle remains visible, unlike display units that provide, for example, cartons with holes to accommodate the bottles. Combinations between supports inserted in the punt and cavity in which the bottles are inserted are also conceivable.

A further aspect of the invention refers to a bottle content analysis unit comprising:
(i) at least one support element comprising a body complementary to the recess with the hollow protrusion suitable to accommodate the bottom of the bottle according to the invention;
(ii) at least one of the bottles of the invention; and
(iii) an analysis instrument included in the support element for analysing the content of the protrusion.

In the transport system or in the analysis unit, advantageously, the bottle according to the invention is inserted or insertable on said support element.

Conveyors that for each position of a bottle provide a support element with an analysis instrument, which could, for example, be a sensor of an analysis equipment are conceivable.

The features described for one aspect of the invention can be transferred *mutatis mutandis* to the other aspects of the invention.

A bottle for containing liquids has obvious industrial applicability.

The objects and advantages will be further highlighted in the disclosure of preferred examples of embodiments of the invention given by way of not-limiting example only.

Variant and further features of the invention are the subject-matter of the dependent claims. The description of the preferred embodiment examples of the bottle, of the transport system and of the analysis system is given by way of not-limiting example with reference to the attached drawings. In particular, unless otherwise specified, the number, shape, sizes and materials of the bottle, of the systems described and of the individual components may vary, and equivalent elements may be applied without deviating from the inventive concept.

### BRIEF DESCRIPTION OF THE DRAWINGS

- Figs. 1a,b: illustrate two glass bottles in longitudinal section in which both bottoms have a punt with a protrusion of the central bottom that extends into the recess of the punt, in one case the protrusion is hollow (fig. 1a), in the other one massive of glass (fig. 1b).
- Figs. 2a,b: illustrate the bottles of figures 1a and 1b with a support system and in the case of figure 2a with an analysis system.
- Figs. 3a-c: illustrate in a perspective side view in transparency various embodiments of a hollow protrusion in the punt: cone-shaped (fig. 3a), diamond-shaped (fig. 3b) and hemispherical-shaped (fig. 3c).
- Figs. 4a-c: illustrate in section in perspective view the bottles of figures from 3a to 3c.
- Figs. 5a-c: illustrate in a perspective side view in transparency various embodiments of a massive protrusion in the punt: cone-shaped (fig. 5a), diamond-shaped (fig. 5b) and hemispherical-shaped (fig. 5c).
- Figs. 6a-c: illustrate in section in perspective view the bottles of figures from 5a to 5c.
- Figs. 7a-c: illustrate in perspective views from below various embodiments of a hollow or massive protrusion in the punt: cone-shaped (fig. 7a), diamond-shaped (fig. 7b) and hemispherical-shaped (fig. 7c).
- Figs. 8a-c: always illustrate in a perspective view from below the bottles of figures from 7a to 7c, but in a version that imitates a photograph.
- Figs. 9a-b: illustrate the bottles of figures 1a and 1b specifying some parameters of the bottom.
- Fig. 10: illustrates in a perspective view from below a bottle with a drop-shaped protrusion.

### DESCRIPTION OF PREFERRED EMBODIMENTS

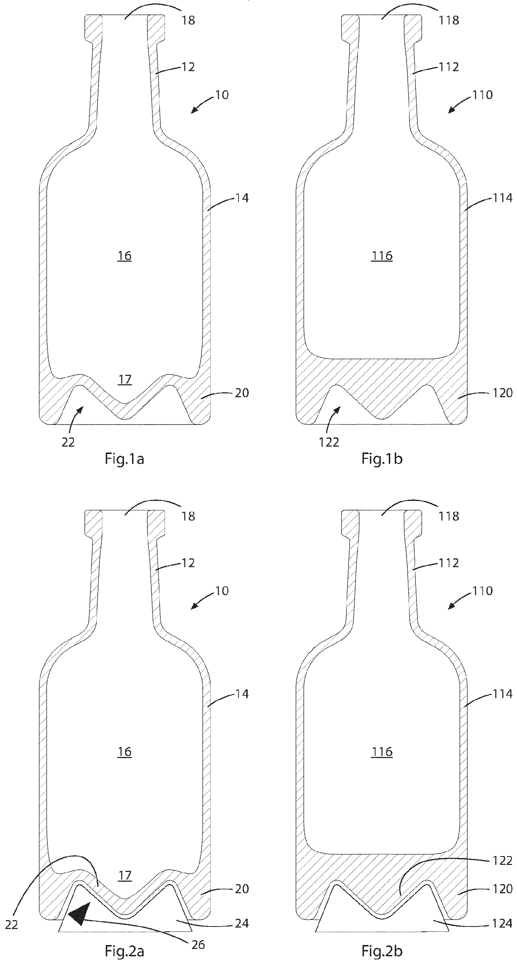

Figs. 1a, b illustrate two glass bottles **10, 110** in longitudinal section in which both bottoms **20, 120** are punt-shaped with a protrusion **22, 122** of the central bottom that extends into the recess, in one case the protrusion is hollow (fig. 1a) with the cavity **17,** in the other one massive of glass (fig. 1b). The bottle **10, 110** has in both cases a neck **12, 112** with an opening **18, 118,** a central containment body **14, 114** suitable to accommodate a liquid in its inner space **16, 116.** The cross section of the central body of the bottle or also of the bottom which can be circular, oval, rectangular, hexagonal, octagonal, etc. has no importance for the invention. Also the height of the bottle or its width is not important for the invention.

The inventive core lies in the conformation of the punt bottom with protrusion.

In the following the same reference numbers refer to equal parts in the same embodiment; the last two digits of each reference number indicate corresponding parts in different embodiments that are distinguished by the nature of the protrusion (massive or hollow), while numbers without letters and numbers with the added letters A and B distinguish the different geometries (cone, diamond, hemisphere).

Figs. 2a, b illustrate the bottles **10, 110** of figures 1a and 1b, respectively, with a support system **24, 124** and in the case of figure 2a with an analysis system **26.** With respect to the previous figures, the support elements **24** and **124** have been added, which preferably have a shape complementary to the recess of the punt and to the protrusion **22, 122** suitable to stop the bottle in place. In the case of the hollow protrusion **22,** an analysis system **26** is provided in the support element **24** which is suitable to analyse the liquid or any bodies contained therein in the cavity **17.** The reduced thickness of a liquid contained in the cavity **17** with respect to its thickness in the containment space **16** allows visualizing the colour of the liquid in the case of dark liquids, such as balsamic vinegar or amaro spirits, which, thanks to the particular shape of the punt according to the invention, is particularly highlighted. It is also possible to carry out analyses of the liquid inside the cavity **17.**

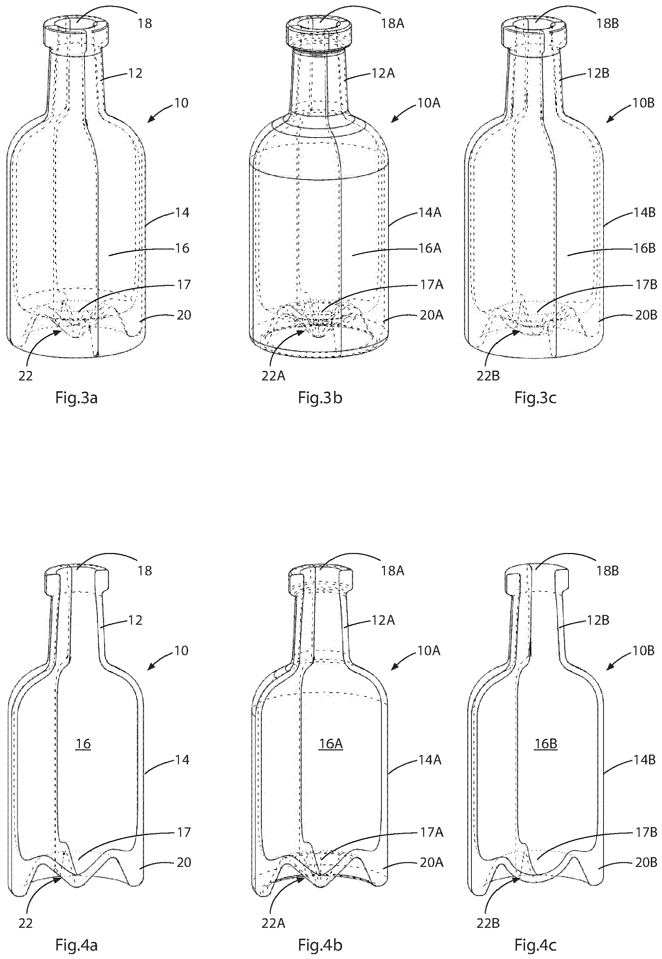

Figs. 3a-c illustrate in a perspective side view in transparency various embodiments of a hollow protrusion **22, 22A, 22B** in the punt: cone-shaped **22** (fig. 3a, corresponds to the bottle of fig. 1a), diamond-shaped **22A** (fig. 3b) and hemispherical-shaped **22B** (fig. 3c). A diamond shape, or any other polyhedral shape makes it more difficult to rotate the bottle on a complementary support element, increasing the positioning stability thereof both during transport and during the analysis of the content of the cavity **17, 17A** and **17B.**

Figs. 4a-c illustrate in section in perspective view the bottles **10, 10a, 10B** of figures from 3a to 3c, highlighting more clearly the cavity **17, 17A** and **17B** of the relative protrusion **22, 22A** and **22B** and the possibility of checking, even without analytical instruments, with the naked eye through the recess for the liquid content in the cavity **17, 17A** and **17B** and identifying any foreign bodies (such as, for example, splinters from production defects) in the liquid.

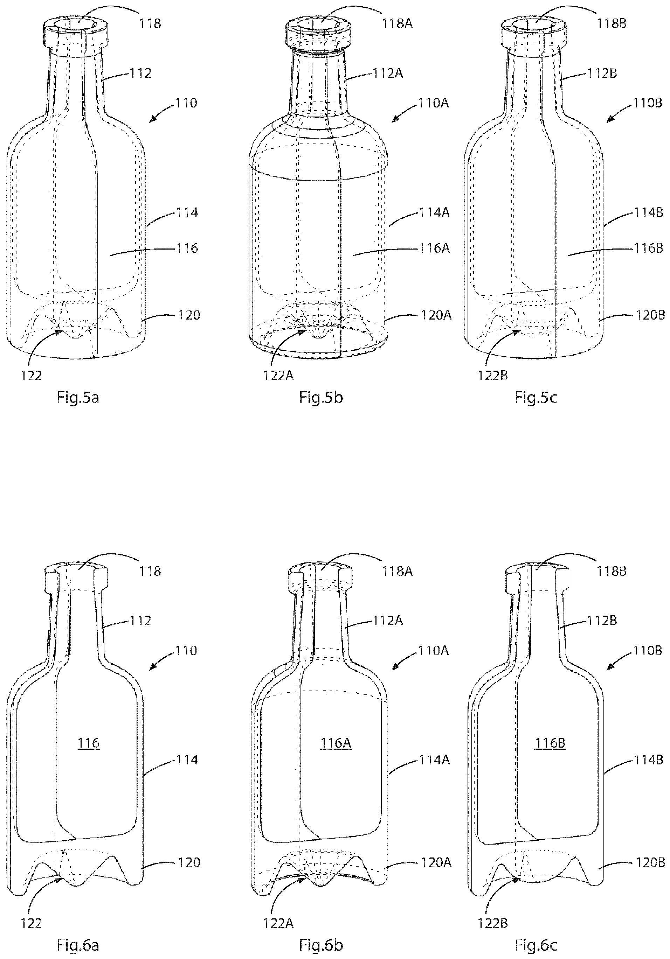

Figs. 5a-c illustrate in a perspective side view various in transparency embodiments of a massive protrusion **122, 122A, 122B** in the punt: cone-shaped **122** (fig. 4a), diamond-shaped **122A** (fig. 4b) and hemispherical-shaped **122B** (fig. 4c). A diamond shape, or any other polyhedral shape makes it more difficult to rotate the bottle on a complementary support element, increasing the positioning stability thereof both during transport and during the analysis of the content of the cavity **117, 117A** and **117B.**

Figs. 6a-c illustrate in section in perspective view the bottles **110, 110A** and **110B** of figures from 5a to 5c, clearly highlighting the relative protrusions **122, 122A** and **122B** in the recess suitable to be held by a respective complementary support element (not depicted). The same obviously applies to the bottles with hollow protrusions.

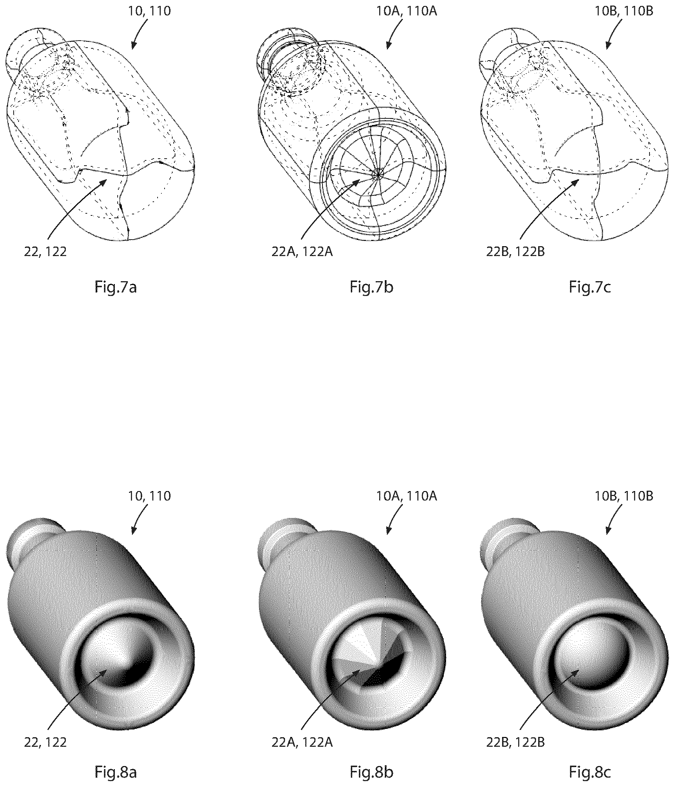

Figs. 7a-c illustrate in perspective views from below various embodiments of a hollow or massive protrusion in the punt: cone-shaped **22, 122** (fig. 7a), diamond-shaped **22A, 122A** (fig. 7b) and hemispherical-shaped **22B, 122B** (fig. 7c).

Figures 8a-c better reflect the particular geometric realizations of the punt of the bottles **10, 110, 10A, 110A, 10B, 110B,** always in a perspective view from below, but in a version that imitates a photograph.

Other shapes of the protrusions are also conceivable: truncated cone, pyramid-like with various numbers of faces, truncated pyramid, cylinder, parallelepiped, pyramids and prisms with different bases, etc. In place of the aforementioned shapes of the protrusion, other geometries are also conceivable, not necessarily polyhedral, such as shapes that remind cake moulds (cakes, puddings,...). As already illustrated above, shapes with irregular geometries, asymmetrical geometries, geometries without central symmetry, geometries without rotational geometry, in particular geometries that allow a single position of the bottle with respect to a reference point, are also conceivable.

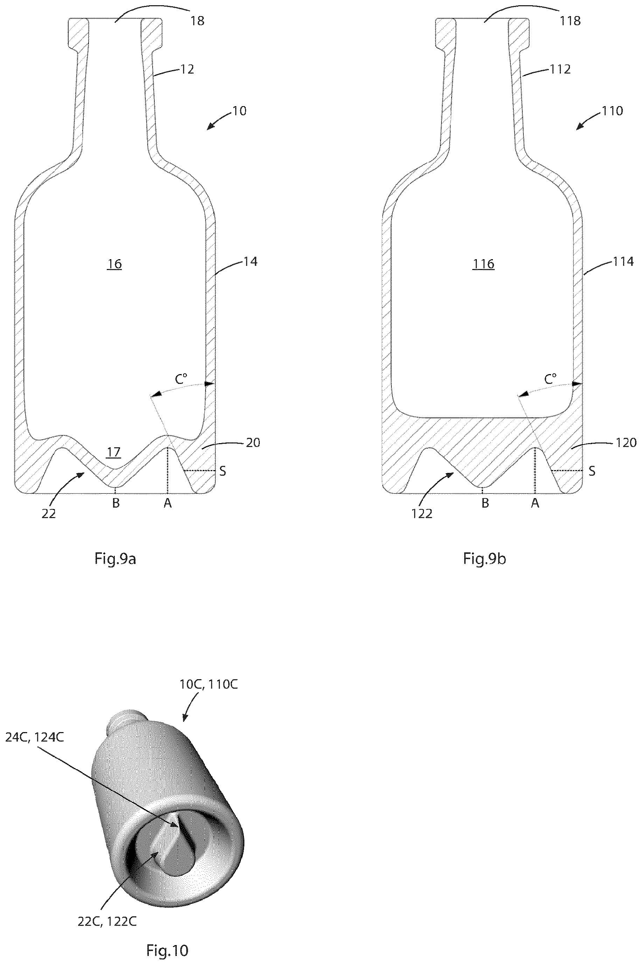

Figs. 9a-b illustrate the bottles of figures 1a and 1b specifying some parameters of the bottom. The choice of the following parameters has a great influence, as illustrated above, on the reflections between parts of the bottom and protrusion and, if any, a liquid contained in the cavity of the hollow protrusions in the punt: the parameter **B** indicating the distance from the lowest point of the protrusion from a support plane of the bottle, the height **A** indicating the distance between the bottom of the tubular wall and the highest point of the punt, i.e. of the relative cavity, S the thickness of the (massive) tubular wall at half the height of the punt and finally the angle **C°** indicating the angle between the inclination formed by the inner wall of the tubular base with respect to the outer wall of the tubular base.

Preferred values for parameter **B** are 2 - 5 mm. The thickness **S** of the tubular wall of the bottom surrounding the protrusion at half height of the punt preferably has values between 5 mm and 8 mm. The diameter of the bottom, if circular, is preferably 5.5 - 7.5 cm. The diameter of the protrusion at its highest point, if circular, advantageously corresponds to 3 - 4 cm. In the case of the hollow protrusion, the thickness of its walls preferably corresponds to 0.3 - 0.5 mm. The height of the largest punt **A** or of the corresponding recess in the bottom advantageously corresponds to 1.0 - 1.8 cm. The angle **C°,** on the other hand, is advantageously between 25° and 35°.

Figure 10 illustrates in a perspective view from below a bottle **10C, 110C** with a drop-shaped protrusion **22C, 122C** (respectively a hollow or massive protrusion), i.e. with a geometry with a single plane of symmetry, wherein the tip **24C, 124C** of the drop forces the bottle in a single position with respect to a reference point on a respective complementary support element.

In the executive phase, parts and/or further modifications or executive variants not described may be added to the bottle, the transport system and the analysis system and to the various uses, object of the invention, without thereby departing from the scope of the invention. Should such modifications or variants fall within the scope of the following claims, they shall all be deemed to be protected by this patent. In practice, the materials used, as well as the dimensions, the numbers and the shapes as long as they are compatible with the specific use, and unless otherwise specified, may be any, depending on the needs. Although the present invention has been described with reference to specific examples, a person skilled in the art will certainly be able to make many other equivalent forms, having the features expressed in the claims and therefore all falling within the scope of protection defined by them.

## Claims

1. A glass bottle (10, 110; 10A, 110A; 10B, 110B) for containing and pouring a liquid, preferably a beverage, vinegar or perfume, comprising:
(a) a hollow main containment body (16, 116; 16A, 116A; 16B, 116B) acting as a container for the liquid during use, preferably having a volume of at least 250 ml, even more preferably a volume of at least 500 ml;
(b) a neck (12, 112; 12A, 112A; 12B, 112B) with an opening (18, 118; 18A, 118A; 18B, 118B) in the upper part of the bottle (10, 110; 10A, 110A; 10B, 110B)
(c) a bottom (20, 120; 20A, 120A; 20B, 120B) made with a punt, i.e. with a recess towards the hollow main containment body of the bottle (10, 110; 10A, 110A; 10B, 110B);
wherein the bottom (20, 120; 20A, 120A; 20B, 120B) and the neck (18, 118; 18A, 118A; 18B, 118B) enclose between them the hollow main containment body (16, 116; 16A, 116A; 16B, 116B), **characterized in that** a portion of the central bottom extends as a protrusion (22, 122; 22A, 122A; 22B, 122B) downwards into the recess.

2. The glass bottle (10, 110; 10A, 110A; 10B, 110B) according to claim 1 **characterized in that** the protrusion (22, 122; 22A, 122A; 22B, 122B) has
(i) the geometry of a solid body whose cross-section has a rotational symmetry, and preferably, the protrusion (22, 122) has the geometry of a symmetrical polyhedron, thus it has a regular polygonal cross-section at any point of its height; or
(ii) a geometry suitable for defining on a respective complementary support element a single position with respect to a reference point, preferably an irregular geometry or a geometry with a single plane of symmetry.

3. The glass bottle (10, 110) according to claim 1 or 2 **characterized in that** the tubular bottom wall is massive.

4. The glass bottle (10, 110; 10A, 110A; 10B, 110B) according to any one of the preceding claims, **characterized in that** the maximum height of the punt A or of its recess relative to the lowest point of the bottle or to a supporting plane of the bottle is at least twice the thickness S of the tubular walls of the bottom (20, 120; 20A, 120A; 20B, 120B) at half their height.

5. The glass bottle (10, 110; 10A, 110A; 10B, 110B) according to any one of the claims from 1 to 3, **characterized in that** the ratio between the maximum height A of the punt or of its recess with respect to the lowest point of the bottle or with respect to a supporting plane of the bottle and the thickness S of the tubular walls of the bottom at half their height is in a range of 1,2 to 1,7, preferably in a range from 1,4 to 1,5.

6. The glass bottle (10, 110; 10A, 110A; 10B, 110B) according to any one of the preceding claims, **characterized in that**
(i) the ratio A/B between the maximum height of the punt A or of its recess with respect to the lowest point of the bottle or a supporting plane of the bottle and the minimum height of the punt B or the distance between the lowest point of the protrusion (22, 122; 22A, 122A; 22B, 122B) and the lowest point of the bottle or a supporting plane of the bottle is between 2 and 10, preferably between 4 and 10, more preferably between 7 and 8; and
(ii) the minimum height of the punt B, i.e. the distance between the lowest point of the protrusion (22, 122; 22A, 122A; 22B, 122B) and the lowest point of the bottle or a supporting plane of the bottle is less than 5 mm, preferably less than 3 mm.

7. The glass bottle (10, 110; 10A, 110A; 10B, 110B) according to any one of the preceding claims, **characterized in that** the angle C° indicating the angle between the inclination formed by the inner wall of the tubular base of the bottom (20, 120; 20A, 120A; 20B, 120B) with respect to the outer wall of the tubular base is less than 45°, preferably less than 40°, more preferably less than 36° and even more preferably less than 26°.

8. The glass bottle (10; 10A; 10B) according to any one of the preceding claims **characterized in that** said protrusion (22; 22A; 22B) is hollow with a respective cavity (17; 17A, 17B) forming a single volume with the interior of the hollow main containment body (16; 16A; 16B).

9. The glass bottle (110; 110A; 110B) according to any one of the preceding claims **characterized in that** said protrusion (122; 122A, 122B) is massive.

10. A glass bottle transport system (10, 110; 10A, 110A; 10B, 110B) comprising:
(i) at least one of said glass bottles (10, 110; 10A, 110A; 10B, 110B) according to any one of claims 1 to 9; and
(ii) at least one support element (24; 124) comprising a body complementary to said recess with said protrusion (22, 122; 22A, 122A; 22B, 122B) suitable to accommodate the bottom (20, 120; 20A, 120A; 20B, 120B) of said glass bottle (10, 110; 10A, 110A; 10B, 110B) according to any one of claims 1 to 9.

11. A glass bottle content analysis unit (10; 10A; 10B) comprising
(i) at least one of said glass bottles (10; 10A; 10B) according to any one of claims 1 to 8;
(ii) at least one support element (24) comprising a body complementary to said recess with said hollow protrusion (22; 22A; 22B) suitable to accommodate the bottom (20; 20A; 20B) of said glass bottle (10; 10A; 10B) according to any one of claims 1 to 8;
(iii) an analysis instrument (26) included in said support element (24) for analysing the content of said protrusion (22; 22A; 22B).
